# DEMANDE DE BREVET EUROPEEN

(11) **EP 2 592 331 A1**
(43) Date de publication de la demande: **15.05.2013**
(21) Numéro de dépôt: 12190172.2
(22) Date de dépôt: 26.10.2012
(51) Int. Cl.: F21S 8/10

(54) **Dispositif d'éclairage et/ou de signalisation d'un véhicule automobile comprenant une source surfacique de lumière**

(30) Priorité: 09.11.2011 FR 1160182
(71) Demandeur: VALEO VISION, 93012 Bobigny Cedex (FR)
(72) Inventeur: Teba, Daniel, 23600 Martos (ES); Rageade, Gilles, 77134 Les Ormes sur Voulzie (FR); Lara, Alberto, 23650 Torredonj (ES)

(57) **Abrégé**

Dispositif d'éclairage et/ou de signalisation (10) d'un véhicule automobile, comprenant une source surfacique de lumière (1), un élément (2, 91, 92, 11, 12, 13, 14, 15, 17) de fixation de la source surfacique de lumière.

## Description

La présente invention concerne un dispositif d'éclairage et/ou de signalisation d'un véhicule ayant notamment une fonction photométrique utile pour la circulation sur route du véhicule, permettant au véhicule d'être vu par d'autres véhicules ou au conducteur dudit véhicule de voir à l'extérieur.

Dans le domaine de la signalisation, tout comme dans celui de l'éclairage, de nombreuses contraintes réglementaires laissent peu de place pour modifier l'aspect des feux à l'état allumé, puisque la photométrie des faisceaux lumineux est imposée dans une très large mesure. Cependant, le style et l'esthétique sont des données très importantes pour ce type de produit, et les équipementiers automobiles cherchent à donner une "signature" à leurs produits, pour qu'ils soient aisément identifiables par l'utilisateur final. Pour ce faire, il peut être intéressant d'utiliser des diodes électroluminescentes organiques.

En effet, les performances des diodes électroluminescentes organiques augmentent rapidement et il est déjà possible de réaliser certaines fonctions d'éclairage et/ou de signalisation avec des diodes électroluminescentes organiques.

Néanmoins, les diodes électroluminescentes organiques restent très fragiles. Elles doivent donc être manipulées avec soin et précaution. Par ailleurs, il est nécessaire de fiabiliser leur fonctionnement. En effet, l'environnement d'un véhicule automobile est contraignant vis-à-vis des diodes électroluminescentes organiques, ces dernières étant soumises dans cet environnement à de nombreuses contraintes mécaniques, notamment des vibrations et des accélérations, et éventuellement à des contraintes thermiques. Cet environnement provoque donc actuellement des défaillances des diodes électroluminescentes organiques.

Le but de l'invention est de fournir un dispositif d'éclairage et/ou de signalisation d'un véhicule remédiant aux inconvénients mentionnés précédemment et améliorant les dispositifs d'éclairage et/ou de signalisation d'un véhicule connus de l'art antérieur. En particulier, l'invention propose un dispositif d'éclairage et/ou de signalisation d'un véhicule permettant d'utiliser de manière fiable des diodes électroluminescentes organiques pour réaliser des fonctions d'éclairage et/ou de signalisation d'un véhicule automobile.

Selon l'invention, un dispositif d'éclairage et/ou de signalisation d'un véhicule automobile comprend une source surfacique de lumière, un élément de fixation de la source surfacique de lumière.

L'aire d'émission de la source surfacique de lumière peut être supérieure à 1 cm², voire supérieure à 5 cm², voire supérieure à 10 cm².

La source surfacique de lumière peut présenter, dans la direction perpendiculaire à sa surface émettrice, une directivité d'émission supérieure à celle d'une diode électroluminescente lambertienne.

La source surfacique de lumière peut avoir une luminance d'au moins 5 000 Cd/m².

La source surfacique de lumière peut comprendre au moins une diode électroluminescente organique.

L'élément de fixation peut comprendre au moins un cadre qui entoure au moins partiellement, notamment totalement, la source surfacique de lumière, ce cadre présentant de préférence une forme qui épouse le pourtour de la source surfacique de lumière.

L'élément de fixation peut comprendre au moins un élément de clippage et/ou un élément d'agrafage et/ou un élément de collage et/ou une soudure et/ou un élément de vissage et/ou un élément de bouterollage, le cas échéant agencé pour solidariser la source surfacique de lumière au cadre, et de préférence est porté par le cadre.

Le dispositif peut comporter un élément amortisseur agencé pour amortir des vibrations transmises à la source surfacique de lumière.

L'élément amortisseur peut être solidaire de l'élément de fixation.

L'élément amortisseur peut comprendre un élément souple, comme un élément élastomère, entre l'élément de fixation et la source surfacique de lumière.

L'élément amortisseur peut faire partie de l'élément de fixation.

L'élément amortisseur peut comprendre une portion de moindre rigidité de l'élément de fixation, par exemple une conformation en forme de vague.

L'élément amortisseur peut être destiné à relier mécaniquement l'élément de fixation à une structure externe au dispositif, comme une structure de véhicule automobile.

L'élément amortisseur peut comprendre une lame flexible ou une portion conformée en zigzag ou accordéon.

L'élément amortisseur peut comprendre un élément déformable, par exemple un élément déformable élastiquement, comme un élément élastomère.

L'élément de fixation peut comprendre au moins une borne électrique agencée de sorte à venir en contact avec une borne électrique de la source surfacique de lumière.

L'élément de fixation peut être agencé tout autour de la source surfacique de lumière ou sur au moins une portion de la périphérie de la source surfacique de lumière.

La source surfacique de lumière peut avoir une forme polygonale et la source surfacique de lumière peut être fixée grâce à l'élément de fixation au niveau de certains seulement de ses bords, en particulier au niveau d'un seul de ses bords. Alternativement, la source surfacique de lumière peut avoir une forme circulaire et la source surfacique de lumière peut être fixée grâce à l'élément de fixation au niveau d'un arc de son pourtour.

Le dispositif peut comprendre plusieurs sources surfaciques de lumière, ces plusieurs sources surfaciques de lumière formant en particulier une surface émettrice de lumière concave ou convexe.

Un autre objet de l'invention est un véhicule automobile comprenant un dispositif optique défini précédemment.

Le dessin annexé représente, à titre d'exemples, différents modes de réalisation d'un dispositif d'éclairage et/ou de signalisation pour véhicule automobile selon l'invention.
La figure 1 est un schéma d'une structure d'un dispositif selon l'invention.
Les figures 2 à 4 sont des schémas de différentes variantes de réalisation d'une telle structure.
La figure 5 est un schéma d'un premier mode de réalisation d'un dispositif selon l'invention.
La figure 6 est un schéma d'un deuxième mode de réalisation d'un dispositif selon l'invention.
La figure 7 est un schéma d'un troisième mode de réalisation d'un dispositif selon l'invention.
La figure 8 est un schéma d'un quatrième mode de réalisation d'un dispositif selon l'invention.
Les figures 9a et 9b sont des schémas d'un cinquième mode de réalisation d'un dispositif selon l'invention.
La figure 10 est un schéma d'un sixième mode de réalisation d'un dispositif selon l'invention.
La figure 11 est un schéma d'un septième mode de réalisation d'un dispositif selon l'invention.
La figure 12 est un schéma d'un huitième mode de réalisation d'un dispositif selon l'invention.
La figure 13 est un schéma d'un neuvième mode de réalisation d'un dispositif selon l'invention.
Les figures 14a et 14b sont des schémas d'un dixième mode de réalisation d'un dispositif selon l'invention.
Les figures 15a et 15b sont des schémas d'un onzième mode de réalisation d'un dispositif selon l'invention.
La figure 16 est un schéma d'une variante du onzième mode de réalisation d'un dispositif selon l'invention.
La figure 17 est un schéma d'un douzième mode de réalisation d'un dispositif selon l'invention.
La figure 18 est un schéma d'un treizième mode de réalisation d'un dispositif selon l'invention.
La figure 19 est un schéma d'un quatorzième mode de réalisation d'un dispositif selon l'invention.
La figure 20 est un schéma d'un quinzième mode de réalisation d'un dispositif selon l'invention.
La figure 21 est un schéma d'un seizième mode de réalisation d'un dispositif selon l'invention.
La figure 22 est un schéma d'un dix-septième mode de réalisation d'un dispositif selon l'invention.
La figure 23 est un schéma représentant des contacts électriques d'alimentation d'une diode électroluminescente.

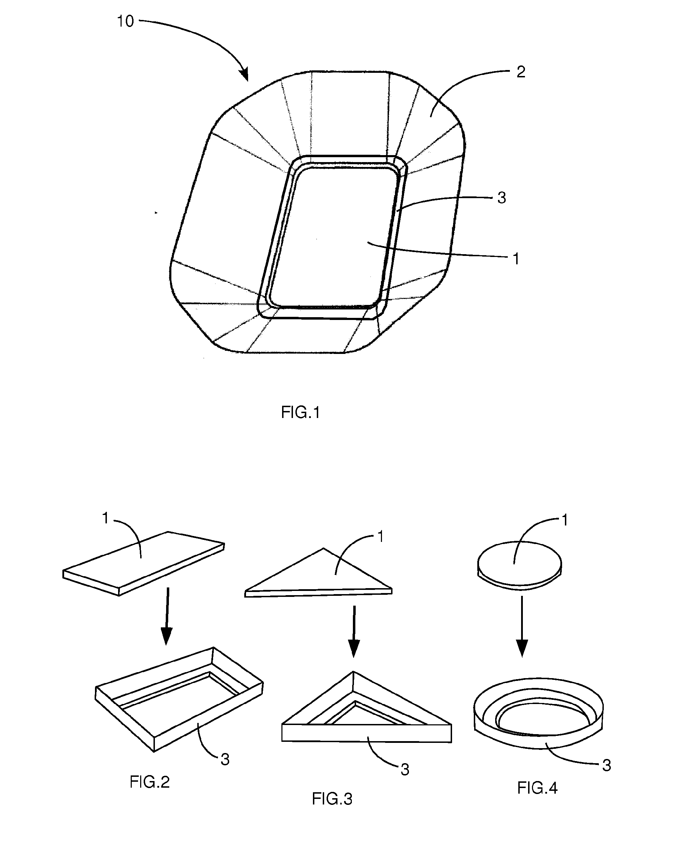

Comme représenté à la figure 1, un dispositif 10 d'éclairage et/ou de signalisation d'un véhicule automobile comprend une source surfacique de lumière, comme une diode électroluminescente organique 1, un élément 2 de fixation de la source surfacique de lumière et un élément amortisseur.

L'élément de fixation permet de lier mécaniquement la source surfacique de lumière à la structure du véhicule automobile, notamment à la structure de la caisse du véhicule automobile. L'élément de fixation comprend avantageusement un support destiné à reprendre les efforts exercés sur la source surfacique de lumière. Pour ce faire, l'élément de fixation peut comprendre un cadre 3 destiné à entourer complètement ou partiellement la source surfacique de lumière.

Comme représenté dans les modes de réalisation des figures 2 à 4, la forme de la source surfacique de lumière peut être variable, notamment rectangulaire ou triangulaire ou circulaire. Toute autre forme de source surfacique de lumière peut être envisagée. Ce cadre peut par exemple comprendre une surface contre laquelle une surface de la source surfacique de lumière est destinée à venir en contact et des bords destinés à entourer la source surfacique de lumière.

L'élément amortisseur permet d'éviter que les actions de contact entre le moyen de fixation et la source surfacique de lumière soient trop violentes ou trop intenses. En effet, sans la présence de l'élément amortisseur, sous l'effet de vibrations, il peut se produire des chocs entre la source surfacique de lumière et le moyen de fixation, notamment le cadre, dans lequel se trouve cette source surfacique de lumière. L'élément amortisseur est disposé de sorte à limiter les vibrations auxquelles sont soumis l'ensemble moyen de fixation-sources surfaciques de lumière ou disposer de sorte à limiter les vibrations auxquelles est soumise la source surfacique de lumière. L'élément amortisseur est un élément se déformant sous l'effet d'une action mécanique. La rigidité de l'élément amortisseur est donc inférieure, voir très inférieure à la rigidité de l'élément de fixation.

Par la suite, dans les différents modes de réalisation, on décrit une diode électroluminescente organique comme exemple de source surfacique de lumière.

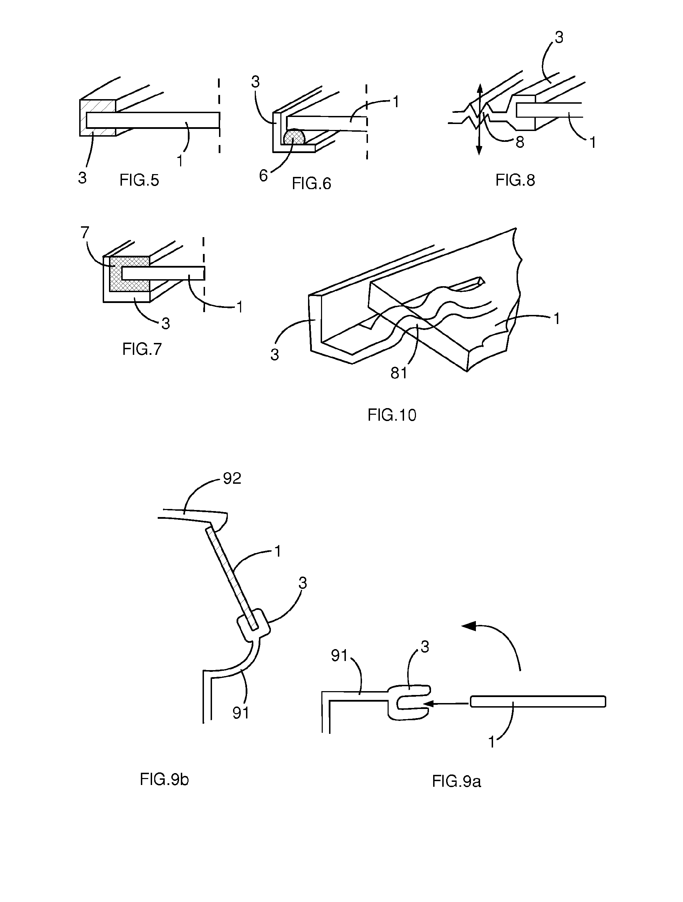

Un premier mode de réalisation de dispositif d'éclairage et/ou de signalisation est décrit ci-après en référence à la figure 5. Dans ce premier mode de réalisation, la diode électroluminescente organique 1 est fixée par surmoulage. Ainsi, le cadre 3 est surmoulé sur le pourtour de la diode électroluminescente organique. Le cadre fait partie de l'élément de fixation et éventuellement de l'élément amortisseur, en utilisant un matériau adéquat pour réaliser le cadre.

Un deuxième mode de réalisation de dispositif d'éclairage et/ou de signalisation est décrit ci-après en référence à la figure 6. Dans ce deuxième mode de réalisation, la diode électroluminescente organique 1 est fixée dans un cadre 3, un élément déformable 6 constituant un élément amortisseur étant interposé entre le cadre et la diode électroluminescente organique. Par exemple, l'élément déformable 6 est collé au fond du cadre et la diode électroluminescente organique est collée sur l'élément déformable. Le cadre 3 fait partie de l'élément de fixation et l'élément déformable 6 fait partie de l'élément amortisseur. Dans ce mode de réalisation par exemple, l'élément amortisseur est solidaire de l'élément de fixation. L'élément amortisseur comprend même un élément souple entre l'élément de fixation et la source surfacique de lumière (1). On peut aussi voir l'élément amortisseur comme faisant partie de l'élément de fixation. Il peut dans ce cas être constitué par une portion de moindre rigidité de l'élément de fixation.

Un troisième mode de réalisation de dispositif d'éclairage et/ou de signalisation est décrit ci-après en référence à la figure 7. Dans ce troisième mode de réalisation, un élément déformable 7 présentant une section en U est mis en place sur le pourtour de la diode électroluminescente organique. Une fois cet élément déformable mis en place, la diode électroluminescente organique est montée dans le cadre 3. Par exemple, l'élément déformable est maintenu sur le cadre par collage. La diode électroluminescente organique peut être maintenue dans l'élément déformable par l'action des deux ailes de la section en U. Le cadre 3 fait partie de l'élément de fixation et l'élément déformable 7 fait partie de l'élément amortisseur.

Un quatrième mode de réalisation de dispositif d'éclairage et/ou de signalisation est décrit ci-après en référence à la figure 8. Dans ce quatrième mode de réalisation, un élément amortisseur 8 est mis en place entre la structure de la caisse du véhicule automobile et le cadre 3. La diode électroluminescente organique 1 est mise en place dans le cadre. L'élément amortisseur comprend une paroi conformée en zigzag ou accordéon, chaque aile de ce zigzag pouvant fléchir. Ainsi, la rigidité de cet élément est limitée. Le cadre 3 fait partie de l'élément de fixation. Dans ce mode de réalisation par exemple, l'élément amortisseur est destiné à relier mécaniquement l'élément de fixation à une structure externe au dispositif, comme une structure de véhicule automobile.

Un cinquième mode de réalisation de dispositif d'éclairage et/ou de signalisation est décrit ci-après en référence aux figures 9a et 9b. Dans ce cinquième mode de réalisation, un élément de fixation 3 pince la diode électroluminescente organique pour la maintenir, cet élément de fixation étant relié mécaniquement à une structure du véhicule automobile via un élément amortisseur 91 comprenant une lame flexible. Comme représenté à la figure 9a, la diode électroluminescente organique est d'abord fixée à l'élément de fixation 3. Puis, on fléchit la lame 91 jusqu'à faire coopérer un bord de la diode électroluminescente organique avec un crochet ou un clip 92 de retenue. Dans ce mode de réalisation par exemple, l'élément amortisseur est destiné à relier mécaniquement l'élément de fixation à une structure externe au dispositif, comme une structure de véhicule automobile.

Un sixième mode de réalisation de dispositif d'éclairage et/ou de signalisation est décrit ci-après en référence à la figure 10. Dans ce sixième mode de réalisation, l'élément de fixation comprend un cadre 3 sur lequel est prévu un élément amortisseur 81. L'élément amortisseur comprend une conformation particulière, par exemple en forme de vague, d'un fond du cadre 3. Cet élément amortisseur est donc réalisé par une lame présentant des bossages qui sont déformables sous l'action d'un effort. Par exemple, la diode électroluminescente organique peut être liée au cadre au niveau de ces bossages.

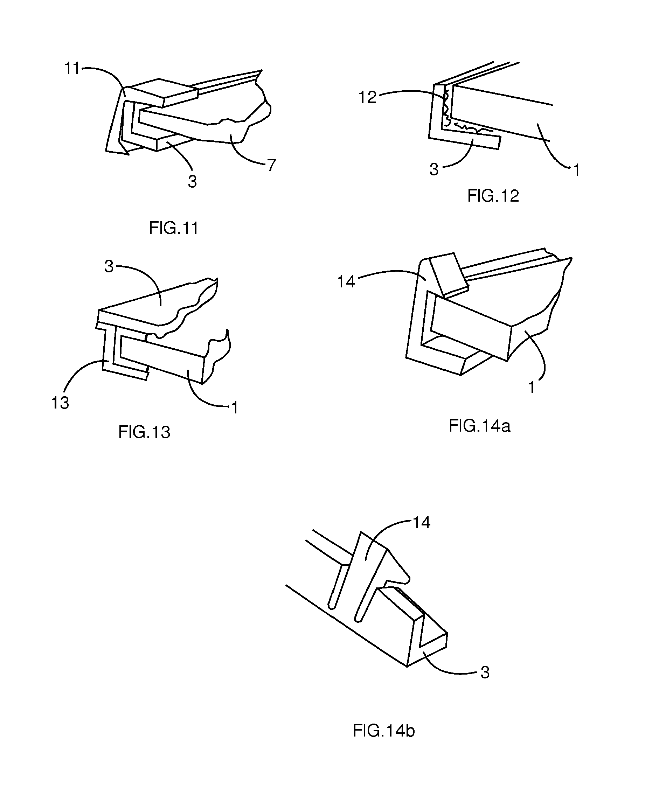

Un septième mode de réalisation de dispositif d'éclairage et/ou de signalisation est décrit ci-après en référence la figure 11. Dans ce septième mode de réalisation, la diode électroluminescente organique 1 est mise en place dans un cadre 3. Des éléments de maintien 11, comme des agrafes, sont disposés sur le cadre pour interdire que la diode électroluminescente organique puisse sortir librement du cadre. Le cadre 3 et les éléments de maintien 11 font partie de l'élément de fixation.

Un huitième mode de réalisation de dispositif d'éclairage et/ou de signalisation est décrit ci-après en référence à la figure 12. Dans ce huitième mode de réalisation, la diode électroluminescente organique est montée dans un cadre 3 par collage à l'aide d'une matière adhésive souple 12. La matière adhésive souple fait partie du moyen amortisseur. Par ailleurs, la matière adhésive souple et le cadre font partie de l'élément de fixation.

Un neuvième mode de réalisation de dispositif d'éclairage et/ou de signalisation est décrit ci-après en référence à la figure 13. Dans ce neuvième mode de réalisation, un cadre 3 est formé en deux parties : un fond et une partie rapportée 13 présentant une section en L et entourant partiellement ou complètement la diode électroluminescente organique. Le fonds et la partie rapportée sont fixés l'un à l'autre par exemple par soudage ou par vissage ou par toute autre technologie. Le cadre 3 fait partie de l'élément de fixation.

Un dixième mode de réalisation de dispositif d'éclairage et/ou de signalisation est décrit ci-après en référence aux figures 14a et 14b. Dans ce dixième mode de réalisation, la diode électroluminescente organique 1 est mise en place dans un cadre présentant une section en L. Le cadre présente de manière discrète sur son pourtour un ou plusieurs crochets 14 ou clips élastiquement déformables et permettant de retenir la diode électroluminescente organique une fois celle-ci mise en place dans le cadre. Les crochets 14 se déforment pour s'effacer lors de la mise en place de la diode électroluminescente organique. Le cadre 3 et les crochets 14 font partie de l'élément de fixation.

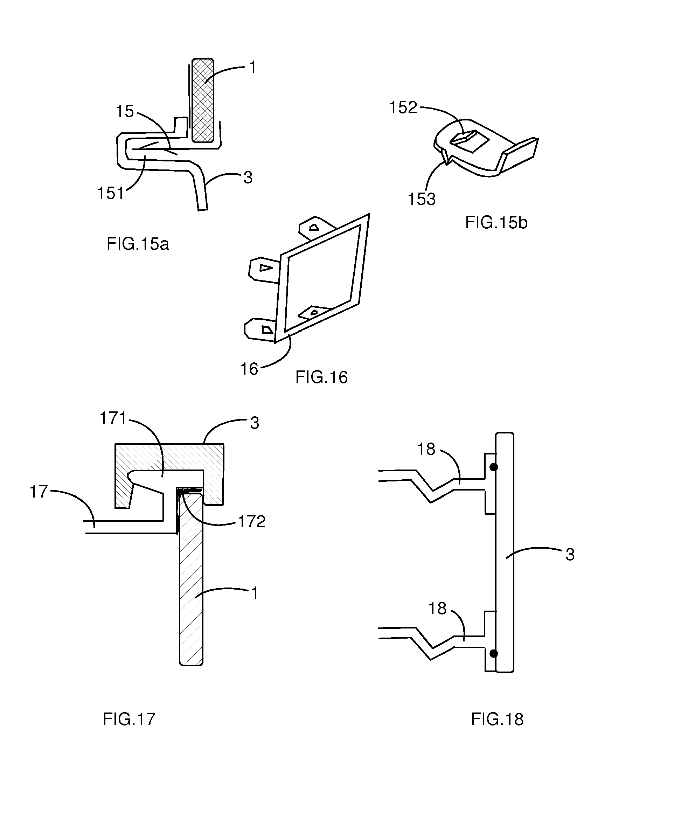

Un onzième mode de réalisation de dispositif d'éclairage et/ou de signalisation est décrit ci-après en référence aux figures 15a et 15b. Dans ce onzième mode de réalisation, l'élément de fixation comprend un cadre 3 présentant des trous 151 dans lesquels sont destinées à venir s'enficher des agrafes 15. Ces agrafes ont par exemple globalement la forme de lames présentant des parties pliées 152, 153 pour autoriser leur enfichage dans les trous en interdisant ou en limitant leur possibilité de retrait de ces trous. Par ailleurs, les agrafes présentent une extrémité pliée permettant de retenir en position la diode électroluminescente organique. Le cadre et les agrafes font partie de l'élément de fixation. Dans une variante de réalisation représentée à la figure 16, les agrafes font partie d'un deuxième cadre permettant de retenir en position la diode électroluminescente organique.

Un douzième mode de réalisation de dispositif d'éclairage et/ou de signalisation est décrit ci-après en référence à la figure 17. Dans ce douzième mode de réalisation, un cadre 3 présente une section en C et entoure partiellement ou complètement la diode électroluminescente organique 1. Un support 17 est prévu pour recevoir la diode électroluminescente 1. Ce support comprend une section en T présentant une aile supérieure 171. La diode électroluminescente organique vient en appui contre un côté de la section en T. Un joint en matériau souple 172 est prévu entre la diode électroluminescente et le support. Le cadre 3 vient se clipper sur l'aile supérieure 171 du support en T et retient ainsi la diode électroluminescente organique. Le support et le cadre font partie de l'élément de fixation. Le joint 172 fait partie de l'élément amortisseur.

Un treizième mode de réalisation de dispositif d'éclairage et/ou de signalisation est décrit ci-après en référence à la figure 18. Dans ce treizième mode de réalisation, un cadre 3 entoure la diode électroluminescente organique 1. Un support 18 supporte le cadre 3. Ce support comprend des parties, notamment des bras, conformées en zigzag ou accordéon, chaque aile de ce zigzag pouvant fléchir. Ainsi, la rigidité de ces éléments est limitée. Le support 18 est lié mécaniquement au cadre 3 par tout moyen de liaison mécanique, notamment par clippage et/ou agrafage et/ou collage et/ou soudage. Ce cadre 3 et le support 18 font partie de l'élément de fixation. Les parties conformées en zigzag font partie de l'élément de fixation. Le joint 172 fait partie de l'élément amortisseur.

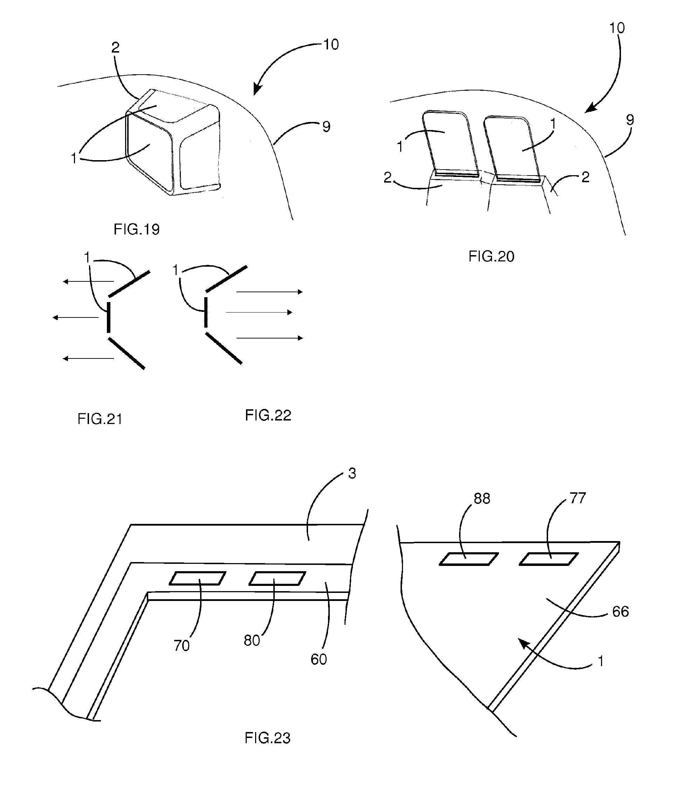

Un quatorzième mode de réalisation de dispositif d'éclairage et/ou de signalisation est décrit ci-après en référence à la figure 19. Dans ce quatorzième mode de réalisation, le dispositif d'éclairage et/ou de signalisation comprend plusieurs diodes électroluminescentes organiques montées sur un élément de fixation 2 commun. Par exemple, sur le mode de réalisation de la figure 19, cinq diodes électroluminescentes organiques 1 sont montées sur l'élément de fixation 2. Seules trois diodes électroluminescentes organiques sont visibles sur la figure. Pour le montage de ces diodes électroluminescentes organiques, toutes les solutions et toutes les combinaisons possibles de solutions décrites précédemment sont envisageables. Par ailleurs, le dispositif d'éclairage et/ou de signalisation comprend également un miroir 9.

Un quinzième mode de réalisation de dispositif d'éclairage et/ou de signalisation est décrit ci-après en référence à la figure 20. Dans ce quinzième mode de réalisation, le dispositif d'éclairage et/ou de signalisation comprend deux diodes électroluminescentes organiques montées sur un élément de fixation 2 commun. Dans ce mode de réalisation, chaque diode électroluminescente organique est fixée par un seul de ses bords au moyen de l'élément de fixation. Pour le montage de ces diodes électroluminescentes organiques, toutes les solutions et toutes les combinaisons possibles de solutions décrites précédemment sont envisageables. Le dispositif d'éclairage et/ou de signalisation comprend également un miroir 9.

Comme représenté à la figure 21, l'agencement de plusieurs diodes électroluminescentes organiques comme celui de la figure 19 permet de réaliser une surface éclairante convexe. Comme représenté à la figure 22, un autre agencement de plusieurs diodes électroluminescentes organiques permet de réaliser une surface éclairante concave.

Dans les différents modes de réalisation, sauf incompatibilité technologique, l'élément de fixation peut comprendre un élément de clippage et/ou un élément d'agrafage et/ou un élément de collage et/ou une soudure et/ou un élément de vissage et/ou un élément de bouterollage.

Enfin, de manière avantageuse, dans toutes les solutions et toutes les combinaisons possibles de solutions décrites précédemment, il est possible de prévoir sur le moyen de fixation, notamment sur le cadre, au moins un premier moyen de connexion électrique 70, 80 destiné à coopérer avec au moins un deuxième moyen de connexion électrique 77, 88 prévu sur une face 66 de la diode électroluminescente organique. Par exemple, le premier moyen de connexion électrique comprend une première surface conductrice 70 et une deuxième surface conductrice 80 prévues sur une face 60 du cadre 3. Le deuxième moyen de connexion électrique comprend une troisième surface conductrice 77 et une quatrième surface conductrice 88. Lorsque l'on met en place la diode électroluminescente organique dans le cadre, la troisième surface conductrice 77 vient en regard et au contact de la première surface conductrice 70 et la quatrième surface conductrice 88 vient en regard et au contact de la deuxième surface conductrice 80. Ainsi, il est possible d'alimenter de manière simple la diode électroluminescente organique 1. Certaines surfaces conductrices peuvent être constituées par des lames flexibles métalliques.

Dans les différents modes de réalisation, l'aire d'émission de chaque diode électroluminescente organique est supérieure à 1 cm², voire supérieure à 5 cm², voire supérieure à 10 cm².

Dans les différents modes de réalisation, la diode électroluminescente organique peut être du type conformable. Par exemple, elle peut être réalisée par un film qu'il est possible de déposer sur une surface, notamment sur une surface gauche. Alternativement, elle peut être réalisée grâce à une technique d'impression des différentes couches, notamment par une technique d'impression sur une surface gauche.

Un tel dispositif 60 de diode électroluminescente organique est représenté à la figure 20. Le dispositif comprend une diode électroluminescente organique 62 et un générateur de tension électrique 61. La diode électroluminescente organique comprend plusieurs couches : une cathode 63, une anode 65 et une couche organique 64. Lorsque la couche organique est soumise à une tension électrique, elle émet un rayonnement lumineux 66 se propageant au travers de l'anode 65 qui est transparente relativement à ce rayonnement. La couche organique peut éventuellement comprendre différentes strates 641 à 645 en matériaux organiques différents. De préférence, on utilise des diodes électroluminescentes organiques comprenant des strates supplémentaires. En plus de la strate 643 émettrice de lumière, la couche organique comprend une strate 641 favorisant le transport des électrons jusqu'à la strate émettrice 643 et une strate 645 favorisant le transport des trous jusqu'à la strate émettrice 643. La couche organique peut aussi comprendre une strate 642 bloquant les trous provenant des strates inférieures 643 à 645 et une strate 644 bloquant les électrons provenant des strates supérieures 641 à 643. L'ensemble de ces strates constitue une microcavité dont l'épaisseur est ajustée pour créer une résonance optique. Ainsi, on réalise des réflecteurs interférentiels sélectifs qui constituent des cavités résonnantes. Par exemple, on peut utiliser une diode électroluminescente organique du type décrit dans le document FR 2 926 677.

Le dispositif d'éclairage et/ou de signalisation selon l'invention permet par exemple d'assurer l'une des fonctions suivantes : éclairage de route, éclairage de croisement, éclairage antibrouillard, signalisation de position du véhicule, signalisation de changement de direction, signalisation de recul, signalisation de freinage, signalisation en cas de brouillard.

## Revendications

1. Dispositif d'éclairage et/ou de signalisation (10) d'un véhicule automobile, comprenant une source surfacique de lumière (1), un élément (2, 91, 92, 11, 12, 13, 14, 15, 17) de fixation de la source surfacique de lumière.

2. Dispositif selon la revendication précédente, **caractérisé en ce que** l'aire d'émission de la source surfacique de lumière est supérieure à 1 cm², voire supérieure à 5 cm², voire supérieure à 10 cm².

3. Dispositif selon l'une des revendications précédentes, **caractérisé en ce que** la source surfacique de lumière présente, dans la direction perpendiculaire à sa surface émettrice, une directivité d'émission supérieure à celle d'une diode électroluminescente lambertienne.

4. Dispositif selon l'une des revendications précédentes, **caractérisé en ce que** la source surfacique de lumière a une luminance d'au moins 5 000 Cd/m².

5. Dispositif selon la revendication précédente, **caractérisé en ce que** la source surfacique de lumière (1) comprend au moins une diode électroluminescente organique (OLED) (1).

6. Dispositif selon l'une des revendications précédentes, **caractérisé en ce que** l'élément de fixation comprend au moins un cadre (3) qui entoure au moins partiellement, notamment totalement, la source surfacique de lumière, ce cadre présentant de préférence une forme qui épouse le pourtour de la source surfacique de lumière.

7. Dispositif selon l'une des revendications précédentes, **caractérisé en ce que** l'élément de fixation comprend au moins un élément de clippage et/ou un élément d'agrafage et/ou un élément de collage et/ou une soudure (3) et/ou un élément de vissage et/ou un élément de bouterollage, le cas échéant agencé pour solidariser la source surfacique de lumière au cadre, et de préférence est porté par le cadre.

8. Dispositif selon l'une des revendications précédentes, **caractérisé en ce qu'il** comporte un élément amortisseur (6, 7, 8, 81, 91) agencé pour amortir des vibrations transmises à la source surfacique de lumière.

9. Dispositif selon la revendication précédente, **caractérisé en ce que** l'élément amortisseur est solidaire de l'élément de fixation.

10. Dispositif selon la revendication 8 ou 9, **caractérisé en ce que** l'élément amortisseur comprend un élément souple, comme un élément élastomère, entre l'élément de fixation et la source surfacique de lumière (1).

11. Dispositif selon la revendication 8 ou 9, **caractérisé en ce que** l'élément amortisseur fait partie de l'élément de fixation.

12. Dispositif selon la revendication précédente, **caractérisé en ce que** l'élément amortisseur comprend une portion de moindre rigidité de l'élément de fixation, par exemple une conformation en forme de vague (81).

13. Dispositif selon la revendication 8 ou 9, **caractérisé en ce que** l'élément amortisseur est destiné à relier mécaniquement l'élément de fixation à une structure externe au dispositif, comme une structure de véhicule automobile.

14. Dispositif selon la revendication précédente, **caractérisé en ce que** l'élément amortisseur comprend une lame flexible (91) ou une portion conformée en zigzag ou accordéon (8).

15. Dispositif selon l'une des revendications précédentes, **caractérisé en ce que** l'élément amortisseur comprend un élément déformable, par exemple un élément déformable élastiquement (6, 7, 8, 81, 91, 12, 18), comme un élément élastomère (6, 7).

16. Dispositif selon l'une des revendications précédentes, **caractérisé en ce que** l'élément de fixation comprend au moins une borne électrique (70, 80) agencée de sorte à venir en contact avec une borne électrique (77, 88) de la source surfacique de lumière.

17. Dispositif selon l'une des revendications précédentes, **caractérisé en ce que** l'élément de fixation est agencé tout autour de la source surfacique de lumière ou sur au moins une portion de la périphérie de la source surfacique de lumière.

18. Dispositif selon l'une des revendications précédentes, **caractérisé en ce que** la source surfacique de lumière a une forme polygonale et **en ce que** la source surfacique de lumière est fixée grâce à l'élément de fixation au niveau de certains seulement de ses bords, en particulier au niveau d'un seul de ses bords ou **en ce que** la source surfacique de lumière a une forme circulaire et **en ce que** la source surfacique de lumière est fixée grâce à l'élément de fixation au niveau d'un arc de son pourtour.

19. Dispositif selon l'une des revendications précédentes, **caractérisé en ce qu'il** comprend plusieurs sources surfaciques de lumière, ces plusieurs sources surfaciques de lumière formant en particulier une surface émettrice de lumière concave ou convexe.
